# EUROPÄISCHE PATENTANMELDUNG

(11) **EP 3 674 120 A1**
(43) Veröffentlichungstag der Anmeldung: **01.07.2020**
(21) Anmeldenummer: 19218362.2
(22) Anmeldetag: 19.12.2019
(51) Int. Cl.: B60J 7/20, B60J 7/185, B60J 7/19

(54) **VORRICHTUNG ZUM ABDECKEN EINES ABLAGERAUMS EINES VERDECKS EINES CABRIOLET-FAHRZEUGS MIT EINER DECKELEINRICHTUNG**

(30) Priorität: 28.12.2018 DE 102018133692
(71) Anmelder: Valmet Automotive Oy, 23500 Uusikaupunki (FI)
(72) Erfinder: Kreiling, Nils, 49080 Osnabrück (DE)
(74) Vertreter: Kronthaler, Schmidt & Coll.

(57) **Zusammenfassung**

Es wird eine Vorrichtung (9) zum Abdecken eines Ablageraums (10) eines Verdecks (2) eines Cabriolet-Fahrzeugs (1) mit einer Deckeleinrichtung (8), einem Mehrgelenkmechanismus (12), einer als Zylinder-Kolben-Einheit (28) ausgeführten Antriebseinrichtung und einer Verriegelungseinrichtung (20) vorgeschlagen, wobei die Zylinder-Kolben-Einheit (28) zur Verlagerung der Deckeleinrichtung (8) zwischen einer offenen Position und einer geschlossenen Position mit dem Mehrgelenkmechanismus (12) wirkverbunden ist. Die Zylinder-Kolben-Einheit (28) ist zur Verlagerung der Verriegelungseinrichtung (20) zwischen einer Verriegelungsposition und einer Freigabeposition mit der Verriegelungseinrichtung (20; 91) wirkverbunden. Die Verriegelungseinrichtung (20) ist in einem Gelenkpunkt (23) an einem Lenker (13) des Mehrgelenkmechanismus (12) angelenkt und die Zylinder-Kolben-Einheit (28) wirkt mit einem ersten Endbereich (29) mit diesem Lenker (13) des Mehrgelenkmechanismus (12) zusammen. Die Verriegelungseinrichtung (20) ist über eine relative Bewegung des ersten Endbereichs (29) der Zylinder-Kolben-Einheit (28) gegenüber der sich in der geschlossenen Position befindlichen Deckeleinrichtung (8) zwischen der Verriegelungsposition und der Freigabeposition verlagerbar.

## Beschreibung

Die Erfindung betrifft eine Vorrichtung zum Abdecken eines Ablageraums eines Verdecks eines Cabriolet-Fahrzeugs mit einer Deckeleinrichtung, einem Mehrgelenkmechanismus, einer Zylinder-Kolben-Einheit und einer Verriegelungseinrichtung nach der im Oberbegriff des Patentanspruches 1 näher definierten Art.

Aus der Praxis sind Cabriolet-Fahrzeuge mit Verdecken hinreichend bekannt, bei denen das Verdeck in offener Position in einem heckseitigen Ablageraum ablegbar ist. Dabei ist in der Regel ein Verdeckkastendeckel vorgesehen, die zwischen einer den Verdeckablageraum zur Ablage des Verdecks freigebenden offenen Position und einer den Verdeckablageraum abdeckenden geschlossenen Position verlagerbar sind. Der Verdeckkastendeckel ist beispielsweise über einen Viergelenkmechanismus karosseriefest angebunden, wobei der Verdeckkastendeckel mittels einer mit dem Viergelenkmechanismus zusammenwirkenden Zylinder-Kolben-Einheit zwischen der offenen und der geschlossenen Position verlagerbar ist. Es ist weiterhin bekannt, eine Verriegelungseinrichtung vorzusehen, mittels welcher der Verdeckkastendeckel in der geschlossenen Position an der Karosserie verriegelbar ist, wobei die Verriegelungseinrichtung ebenfalls durch die Zylinder-Kolben-Einheit betätigbar ist.

Bei bekannten Lösungen ist die Zylinder-Kolben-Einheit mit einem ersten Endbereich direkt oder indirekt karosseriefest gelagert, wobei ein zweiter Endbereich der Zylinder-Kolben-Einheit mit dem Viergelenkmechanismus zusammenwirkt. Die Verriegelungseinrichtung ist hierbei um einen karosseriefesten Gelenkpunkt schwenkbar gelagert und in der Verriegelungsposition in Eingriff mit einem deckelfesten Verriegelungselement. Die Verriegelungseinrichtung wird von dem der Karosserie zugewandten ersten Endbereich der Zylinder-Kolben-Einheit betätigt.

Es ist weiterhin bekannt, die Zylinder-Kolben-Einheit mit einem ersten Endbereich der Zylinder-Kolben-Einheit direkt oder indirekt an dem Verdeckkastendeckel zu lagern, wobei ein zweiter Endbereich der Zylinder-Kolben-Einheit mit dem Viergelenkmechanismus zusammenwirkt. Die Verriegelungseinrichtung ist hierbei um einen deckelseitigen Gelenkpunkt schwenkbar gelagert und in der Verriegelungsposition in Eingriff mit einem karosseriefest angeordneten Verriegelungselement. Die Verriegelungseinrichtung wird von dem dem Verdeckkastendeckel zugewandten ersten Endbereich der Zylinder-Kolben-Einheit betätigt.

Die bekannten Ausführungen sind hinsichtlich der möglichen Anordnungspositionen der Verriegelungseinrichtung eingeschränkt, so dass diese Ausführungen bei ungünstigen Bauraumbedingungen gegebenenfalls nicht einsetzbar sind.

Es ist Aufgabe der vorliegenden Erfindung, eine Vorrichtung zum Abdecken eines Ablageraums eines Verdecks eines Cabriolet-Fahrzeugs der eingangs genannten Art zu schaffen, die möglichst flexibel an vorliegende Bauraumverhältnisse anpassbar ist.

Diese Aufgabe wird mit einer Vorrichtung gemäß den Merkmalen des Patentanspruches 1 und einem Cabriolet-Fahrzeug mit einer solchen Vorrichtung gelöst.

Es wird somit eine Vorrichtung zum Abdecken eines Ablageraums eines Verdecks eines Cabriolet-Fahrzeugs mit einer Deckeleinrichtung, einem Mehrgelenkmechanismus, einer als Zylinder-Kolben-Einheit ausgeführten Antriebseinrichtung und einer Verriegelungseinrichtung vorgeschlagen, wobei die Zylinder-Kolben-Einheit zur Verlagerung der Deckeleinrichtung zwischen einer den Ablageraum zumindest teilweise freigebenden offenen Position und einer den Ablageraum zumindest teilweise abdeckenden geschlossenen Position mit dem Mehrgelenkmechanismus wirkverbunden ist, und wobei die Zylinder-Kolben-Einheit zur Verlagerung der Verriegelungseinrichtung zwischen einer die Deckeleinrichtung in der geschlossenen Position haltenden Verriegelungsposition und einer eine Bewegung der Deckeleinrichtung freigebenden Freigabeposition mit der Verriegelungseinrichtung wirkverbunden ist.

Erfindungsgemäß ist vorgesehen, dass die Verriegelungseinrichtung in einem Gelenkpunkt an einem Lenker des Mehrgelenkmechanismus angelenkt ist und die Zylinder-Kolben-Einheit mit einem ersten Endbereich insbesondere direkt oder indirekt mit diesem Lenker des Mehrgelenkmechanismus zusammenwirkt, wobei die Verriegelungseinrichtung über eine relative Bewegung des ersten Endbereichs der Zylinder-Kolben-Einheit gegenüber der sich in der geschlossenen Position befindlichen Deckeleinrichtung zwischen der Verriegelungsposition und der Freigabeposition verlagerbar ist.

Die erfindungsgemäße Lösung stellt durch die Anlenkung der Verriegelungseinrichtung an den Mehrgelenkmechanismus auf einfache Weise eine Vielzahl von Positionen für die Verriegelungseinrichtung zur Verfügung, so dass die erfindungsgemäße Lösung auf einfache Weise hinsichtlich vorliegender Bauraumverhältnisse anpassbar und bei einer Vielzahl von Anwendungsfällen auch mit ungünstigen Bauraumsituationen implementierbar ist. Eine erfindungsgemäße Vorrichtung kann insbesondere zum Einsatz kommen, wenn im Bereich der Deckeleinrichtung oder im Bereich der Karosserie, in denen die Verriegelungseinrichtung bei bekannten Ausführungen angeordnet ist, ein hierfür erforderlicher Bauraum nicht gegeben ist. Die erfindungsgemäß gestaltete Verriegelungseinrichtung kann gegenüber bekannten Ausführungen in einem anderen Bereich angeordnet werden, so dass sie wesentlich flexibler einsetzbar ist. Für die Anordnung der Verriegelungseinrichtung an dem Mehrgelenkmechanismus steht dabei eine Vielzahl von Positionen zur Verfügung, so dass eine große Variante an Umsetzungsvarianten bereitgestellt wird.

Sowohl zur Verlagerung der beispielsweise einen Verdeckkastendeckel darstellenden Deckeleinrichtung als auch zur Verlagerung der Verriegelungseinrichtung ist dabei vorteilhafterweise lediglich eine einzige Antriebseinrichtung erforderlich, die direkt oder indirekt mit dem Mehrgelenkmechanismus und der Verriegelungseinrichtung verbunden ist.

Bei einer konstruktiv einfach und kostengünstig umsetzbaren Ausführung der erfindungsgemäßen Vorrichtung ist der erste Endbereich der Zylinder-Kolben-Einheit direkt an der Verriegelungseinrichtung angelenkt.

Die Verriegelungseinrichtung kann flexibel in einer gewünschten Position an dem Lenker des Mehrgelenkmechanismus angebunden sein, wenn ein an dem Lenker des Mehrgelenkmechanismus angebundener Betätigungsmechanismus vorgesehen ist, der einerseits mit der Verriegelungseinrichtung und andererseits mit dem ersten Endbereich der Zylinder-Kolben-Einheit verbunden ist.

Der Betätigungsmechanismus kann einen an dem Lenker angelenkten und mit dem ersten Endbereich der Zylinder-Kolben-Einheit verbundenen Hebel bzw. eine Wippe aufweisen, der direkt oder mittels einer beispielsweise mit einem Lenker oder mehreren Lenkern ausgeführten Koppeleinrichtung mit der Verriegelungseinrichtung zusammenwirkt.

Bei einer vorteilhaften Ausführung ist ein mit dem Lenker des Mehrgelenkmechanismus verbundener Schiebemechanismus vorgesehen, mittels welchem die Zylinder-Kolben-Einheit mit der Verriegelungseinrichtung wirkverbunden ist, wobei der erste Endbereich der Zylinder-Kolben-Einheit an den Schiebemechanismus angebunden ist. Der Schiebemechanismus kann beispielsweise mit einer Kulissenführung oder einer Schiene ausgeführt sein, wobei ein verlagerbares Element des Schiebemechanismus direkt oder über einen Betätigungsmechanismus mit der Verriegelungseinrichtung verbunden sein kann.

Um die Deckeleinrichtung in der geschlossenen Position zu sichern, kann die Verriegelungseinrichtung in der Verriegelungsposition mit einem an der Deckeleinrichtung angeordneten Verriegelungselement in Eingriff sein oder mit einem an einer Karosserie angeordneten Verriegelungselement in Eingriff bringbar sein. Die Verriegelungseinrichtung ist vorzugsweise als Verriegelungshaken ausgeführt, der in der Verriegelungsposition mit einem beispielsweise bolzenartig ausgeführten Verriegelungselement zusammenwirkt.

Wenn die Verriegelungseinrichtung in der Verriegelungsposition gleichzeitig sowohl mit einem an der Deckeleinrichtung angeordneten Verriegelungselement in Eingriff ist als auch mit einem an einer Karosserie angeordneten Verriegelungselement in Eingriff bringbar ist, ist die Deckeleinrichtung in der geschlossenen Position auch bei im Betrieb auftretenden elastischen Verformungen sicher und ortsfest an der Karosserie festgelegt. Hierdurch können erforderliche Toleranzen im Bereich von zwischen der geschlossenen Deckeleinrichtung und der angrenzenden Karosserie vorliegenden Fugen sicher eingehalten werden.

Bei einer konstruktiv einfachen Ausführung kann die Verriegelungseinrichtung als Doppelhaken ausgeführt sein. Der Doppelhaken ist in der Verriegelungsposition insbesondere gleichzeitig mit einem insbesondere bolzenartig ausgeführten deckelseitig gelagerten Verriegelungselement und einem insbesondere bolzenartig ausgeführten karosserieseitig gelagerten Verriegelungselement in Eingriff.

Ein dem ersten Endbereich der Zylinder-Kolben-Einheit abgewandter zweiter Endbereich der Zylinder-Kolben-Einheit kann an der Deckeleinrichtung, an einer Karosserie oder an einem Lenker des Mehrgelenkmechanismus angebunden sein. Hierdurch ist auf konstruktiv einfache Weise eine Anpassung an die im jeweiligen Anwendungsfall vorliegenden Bauraumverhältnisse möglich.

Um die Deckeleinrichtung mit einem vorteilhaft geringen Hub der Zylinder-Kolben-Einheit zwischen der geschlossenen Position und der offenen Position verlagern zu können und/oder gewünschte Kraftverhältnisse zu erzielen, ist bei einer vorteilhaften Ausführung der Erfindung ein mit dem Mehrgelenkmechanismus verbundenes Übersetzungsgetriebe vorgesehen, an das ein dem ersten Endbereich der Zylinder-Kolben-Einheit abgewandter zweiter Endbereich der Zylinder-Kolben-Einheit zur Betätigung des Mehrgelenkmechanismus angebunden ist. Das beispielsweise ein Vorgelegegetriebe darstellende Übersetzungsgetriebe ist vorzugsweise als Zweischlag bzw. als Dreigelenkbogen mit zwei gelenkig miteinander verbundenen Lenkern ausgeführt, wobei ein erster Lenker karosseriefest angelenkt und ein zweiter Lenker mit dem Mehrgelenkmechanismus verbunden ist.

Bei einer besonders einfachen Ausführung einer erfindungsgemäßen Vorrichtung ist der Mehrgelenkmechanismus als Viergelenkmechanismus mit zwei Lenkern ausgebildet, die jeweils sowohl an der Deckeleinrichtung angebunden sind als auch in Einbauposition der Vorrichtung an einer Karosserie angelenkt sind.

Um eine Verlagerungsbewegung der Deckeleinrichtung besonders flexibel gestalten zu können, kann der Mehrgelenkmechanismus mit wenigstens fünf, insbesondere sieben Gelenkpunkten ausgeführt sein. Vorzugsweise ist der Mehrgelenkmechanismus dabei als Siebengelenkmechanismus mit vier Lenkern bzw. Hebeln ausgeführt.

Ein definierter Wechsel zwischen dem Antrieb der Verriegelungseinrichtung und der Verlagerung der Deckeleinrichtung ist bei einer vorteilhaften Ausführung der Erfindung geschaffen, wenn eine beispielsweise als Anschlag ausgeführte Blockiereinrichtung vorgesehen ist, mittels der eine Bewegung der Verriegelungseinrichtung in wenigstens einer Richtung begrenzt ist. Mittels der Blockiereinrichtung ist insbesondere die Freigabeposition der Verriegelungseinrichtung definiert festlegbar und sicherstellbar, dass die Verriegelungseinrichtung nach Erreichen der Freigabeposition nicht weiter verschwenkbar ist. Die Blockiereinrichtung kann direkt mit der Verriegelungseinrichtung oder mit dem die Verriegelungseinrichtung betätigenden Betätigungsmechanismus bzw. dem Schiebemechanismus zusammenwirken. Insbesondere ist vorgesehen, dass die Zylinder-Kolben-Einheit aufgrund des geringeren Widerstands zunächst die Verriegelungseinrichtung verlagert und anschließend - nach Erreichen der Verriegelungsposition der Verriegelungseinrichtung - die Deckeleinrichtung verlagert wird, welche eine größere Kraft zur Verlagerung benötigt.

Bei einer vorteilhaften Ausführung kann es vorgesehen sein, dass der erste Endbereich der Zylinder-Kolben-Einheit derart mit dem Mehrgelenkmechanismus zusammenwirkt, dass die Deckeleinrichtung in Einbauposition der Vorrichtung mittels einer durch eine relative Bewegung des ersten Endbereichs der Zylinder-Kolben-Einheit gegenüber einer Karosserie zwischen der offenen Position und der geschlossenen Position bei insbesondere gegenüber der Karosserie ortsfestem ersten Endbereich der Zylinder-Kolben-Einheit verlagert ist.

Alternativ hierzu kann es auch vorgesehen sein, dass der zweite Endbereich der Zylinder-Kolben-Einheit derart mit dem Mehrgelenkmechanismus zusammenwirkt, dass die Deckeleinrichtung in Einbauposition der Vorrichtung mittels einer durch eine relative Bewegung des zweiten Endbereichs der Zylinder-Kolben-Einheit gegenüber einer Karosserie zwischen der offenen Position und der geschlossenen Position verlagert ist.

Der Lenker des Mehrgelenkmechanismus, an dem sowohl die Verriegelungseinrichtung gelagert ist und mit dem die Zylinder-Kolben-Einheit zusammenwirkt, ist vorzugsweise einenends gelenkig mit der Deckeleinrichtung verbunden und in Einbauposition der Vorrichtung andernends karosseriefest angebunden.

Weitere Vorteile und vorteilhafte Ausführungsformen der erfindungsgemäßen Vorrichtung ergeben sich aus den Patentansprüchen und den nachfolgend unter Bezugnahme auf die Zeichnung prinzipmäßig beschriebenen Ausführungsbeispielen, bei denen für bau- und/oder funktionsgleiche Bauteile die gleichen Bezugszeichen verwendet sind.

Es zeigt:
- Fig. 1: eine vereinfachte dreidimensionale Ansicht eines Cabriolet-Fahrzeugs mit einem verlagerbaren Verdeck in der geschlossenen Position, wobei in einem Heckbereich des Cabriolet-Fahrzeugs eine einen Verdeckkastendeckel aufweisende Vorrichtung angeordnet ist, wobei der Verdeckkastendeckel in einer einen Ablageraum abdeckenden geschlossenen Position gezeigt ist;
- Fig. 2: eine vereinfachte Seitenansicht einer ersten Ausführungsform der Vorrichtung gemäß Fig. 1, wobei die Vorrichtung einen als Viergelenkmechanismus ausgeführten Mehrgelenkmechanismus, eine Zylinder-Kolben-Einheit und eine Verriegelungseinrichtung aufweist, wobei die Zylinder-Kolben-Einheit mit einem ersten Endbereich mittels eines Betätigungsmechanismus mit der Verriegelungseinrichtung zusammenwirkt und mit einem zweiten Endbereich mit einem mit dem Viergelenkmechanismus verbundenen Übersetzungsgetriebe verbunden ist;
- Fig. 3: eine Fig. 2 entsprechende Seitenansicht einer zweiten Ausführungsform einer Vorrichtung, bei der der Mehrgelenkmechanismus als Siebengelenkmechanismus ausgeführt ist;
- Fig. 4: eine Fig. 2 und Fig. 3 entsprechende Seitenansicht einer dritten Ausführungsform einer Vorrichtung, bei der die Zylinder-Kolben-Einheit mit dem zweiten Endbereich direkt an einen Lenker des Mehrgelenkmechanismus angebunden ist;
- Fig. 5: eine Fig. 2 bis Fig. 4 entsprechende Seitenansicht einer vierten Ausführungsform einer Vorrichtung, bei der die Zylinder-Kolben-Einheit mit dem zweiten Endbereich an den Verdeckkastendeckel angebunden ist;
- Fig. 6: eine Fig. 2 bis Fig. 5 entsprechende Seitenansicht einer fünften Ausführungsform einer Vorrichtung, bei der die Zylinder-Kolben-Einheit mit dem zweiten Endbereich karosseriefest angebunden ist; und
- Fig. 7: eine Fig. 2 bis Fig. 6 entsprechende Seitenansicht einer sechsten Ausführungsform einer Vorrichtung, bei der die Zylinder-Kolben-Einheit mit dem ersten Endbereich direkt an die Verriegelungseinrichtung angebunden ist.

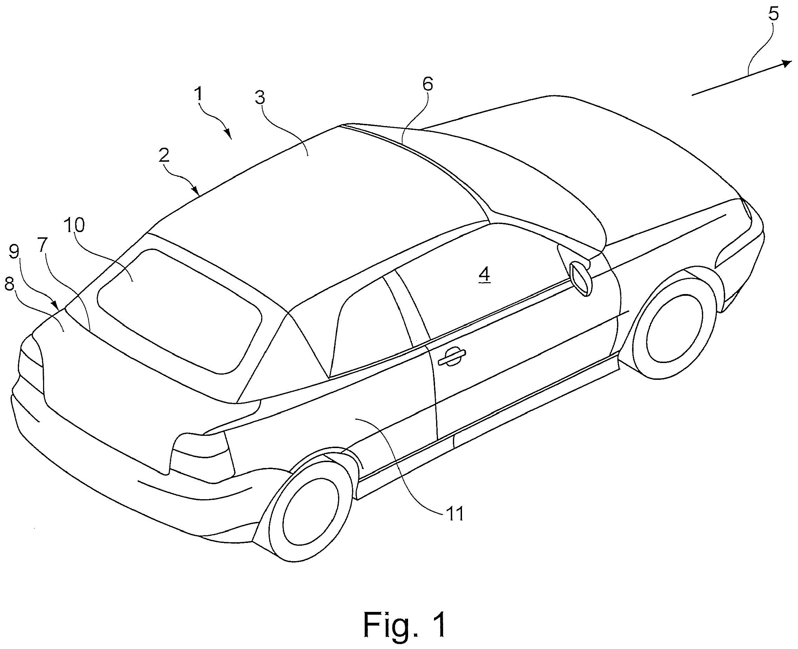

In Fig. 1 ist ein Cabriolet-Fahrzeug 1 mit einem Verdeck 2 gezeigt. Das hier von einem Verdeckbezug 3 überspannte Verdeck 2, das nicht nur als Soft-Top, sondern auch als Hard-Top ausgeführt sein kann, ist in einer geschlossenen Position gezeigt, in der das Verdeck 2 einen Fahrgastraum 4 abdeckt. Das Verdeck 2 erstreckt sich von einem in Fahrzeugfrontrichtung 5 in einem vorderen Bereich angeordneten Windschutzscheibenrahmen 6, an dem das Verdeck 2 insbesondere mittels einer Verriegelungseinrichtung verriegelbar ist, bis zu einem heckseitigen Stoffhaltebügel 7 bzw. Spannbügel, der in der geschlossenen Position an eine einen Verdeckkastendeckel 8 darstellende Deckeleinrichtung einer Vorrichtung 9 grenzt, auf dem der Stoffhaltebügel 7 insbesondere aufliegt und dabei den Verdeckbezug 3 spannt.

Das Verdeck 2 ist aus der in Fig. 1 gezeigten geschlossenen Position mittels eines Verdeckgestänges in eine den Fahrgastraum 4 zumindest teilweise freigebende offene Position verlagerbar, in der das Verdeck 2 in einem rückwärtigen Fahrzeugbereich vorliegend in einem von dem Verdeckkastendeckel 8 abgedeckten heckseitigen Ablageraum 10 abgelegt ist. Dieser kann bei geschlossenem Verdeck 2 insbesondere zusätzlich als Kofferraum genutzt werden.

Der Verdeckkastendeckel 8 ist zumindest zur Freigabe einer Durchtrittsöffnung für das Verdeck 2 mit einem in Fahrzeugfrontrichtung 5 vorderen Bereich aufschwenkbar. Zusätzlich kann es auch vorgesehen sein, dass der Verdeckkastendeckel 8 mit einem in Fahrzeugfrontrichtung 5 hinteren Bereich aufschwenkbar ist, um einen Zugang zu dem Kofferraum zu ermöglichen.

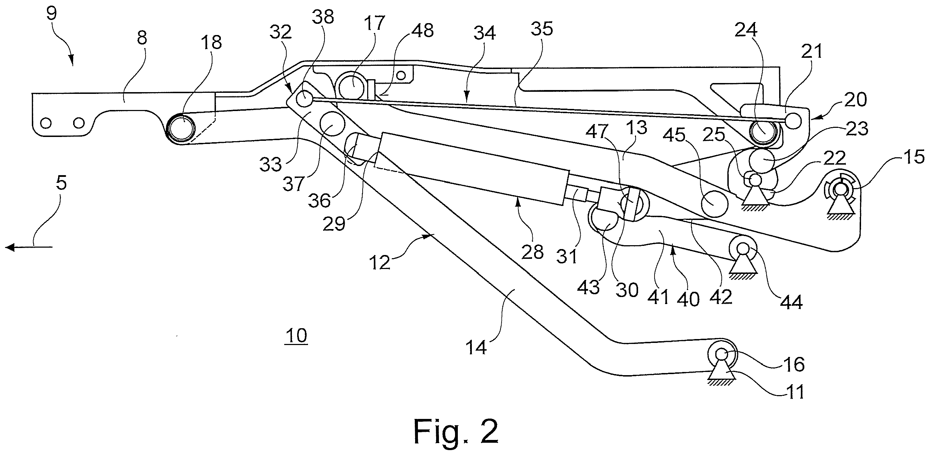

In Fig. 2 ist die Vorrichtung 9 in Alleinstellung gezeigt, die neben dem Verdeckkastendeckel 8, einen hier als Viergelenkmechanismus 12 ausgeführten Mehrgelenkmechanismus zur Verlagerung des Verdeckkastendeckels 8 zwischen der in Fig. 1 gezeigten, den Ablageraum 10 abdeckenden geschlossenen Position und einer eine Ablagebewegung des Verdecks 2 ermöglichenden, den Ablageraum 10 freigebenden offenen Position verlagerbar ist. Der Viergelenkmechanismus 12 weist zwei Lenker 13, 14 auf, von denen sowohl der erste Lenker 13 als auch der zweite Lenker 14 jeweils einen karosseriefesten Gelenkpunkt 15 bzw. 16 als auch einen deckelseitigen Gelenkpunkt 17 bzw. 18 aufweist.

Die Vorrichtung 9 weist weiterhin eine Verriegelungseinrichtung 20 auf, die hier als Doppelhaken 20 mit zwei hakenförmigen Verriegelungsbereichen 21, 22 ausgeführt ist und in einem Gelenkpunkt 23 drehbar mit dem ersten Lenker 13 verbunden ist, wobei der Gelenkpunkt 23 in einem die Verriegelungsbereiche 21, 22 verbindenden Zwischenbereich angeordnet ist. Die Verriegelungseinrichtung 20 ist in Fig. 2 in einer Verriegelungsposition gezeigt, in der der erste hakenförmige Verriegelungsbereich 21 in Eingriff mit einem bolzenartig ausgeführten und an dem Verdeckkastendeckel 8 angebundenen Verriegelungselement 24 ist. Gleichzeitig ist in der Verriegelungsposition der Verriegelungseinrichtung 20 der zweite hakenförmige Verriegelungsbereich 22 in Eingriff mit einem bolzenartig ausgeführten und an einer Karosserie 11 des Cabriolet-Fahrzeugs 1 angeordneten Verriegelungselement 25. In der Verriegelungsposition legt die Verriegelungseinrichtung 20 somit den Verdeckkastendeckel 8 an der Karosserie 11 fest.

Zur Freigabe einer Bewegung des Verdeckkastendeckels 8 in Richtung der zur Ablage des Verdecks 2 vorgesehenen offenen Position ist die Verriegelungseinrichtung 20 aus der in Fig. 2 gezeigten Verriegelungsposition in eine Freigabeposition verlagerbar, in der die Verriegelungsbereiche 21, 22 außer Eingriff mit dem jeweiligen Verriegelungselement 24 bzw. 25 sind. Durch die S-förmige Ausführung der Verriegelungseinrichtung 20, bei der das Verriegelungselement 24 durch den Verriegelungsbereich 21 von einer Seite und das Verriegelungselement 25 durch den Verriegelungsbereich 22 von einer gegenüberliegenden Seite umgriffen wird, führt eine Verschwenkung der Verriegelungseinrichtung 20 gemäß der Ansicht in Fig. 2 im Uhrzeigersinn um den Gelenkpunkt 23 dazu, dass sowohl der erste hakenförmige Verriegelungsbereich 21 als auch der zweite hakenförmige Verriegelungsbereich 22 außer Eingriff mit dem jeweiligen Verriegelungselement 24 bzw. 25 kommt und eine Verlagerungsbewegung des Verdeckkastendeckels 8 freigegeben wird.

Neben der gezeigten Ausführung der Verriegelungseinrichtung als Doppelhaken kann es bei alternativen Ausführungen auch vorgesehen sein, dass die in einem Gelenkpunkt schwenkbar an einem Lenker des Mehrgelenkmechanismus angeordnete Verriegelungseinrichtung nur einen beispielsweise hakenförmigen Verriegelungsbereich aufweist, der mit einem an dem Verdeckkastendeckel oder mit einem an der Karosserie angeordneten Verriegelungselement in Eingriff bringbar ist.

Zur Betätigung sowohl des Viergelenkmechanismus 12 als auch der Verriegelungseinrichtung 20 weist die Vorrichtung 9 eine als Zylinder-Kolben-Einheit 28 ausgeführte Antriebseinrichtung auf. Die Zylinder-Kolben-Einheit 28 weist zwei Endbereiche 29, 30 auf, wobei der erste Endbereich 29 translatorisch gegenüber dem zweiten Endbereich 30 verlagerbar ist.

Der erste Endbereich 29 der Zylinder-Kolben-Einheit 28 ist mittels eines Betätigungsmechanismus 32 mit der Verriegelungseinrichtung 20 verbunden, wobei der Betätigungsmechanismus 32 vorliegend mit einem Hebel 33 bzw. einem eine Wippe darstellenden Kipphebel und einer einen Koppellenker 35 aufweisenden Koppeleinrichtung 34 ausgeführt ist. Die Zylinder-Kolben-Einheit 28 ist mit dem ersten Endbereich 29 in einem Gelenkpunkt 36 an dem Hebel 33 angelenkt. Der Hebel 33 wiederum ist in einem Gelenkpunkt 37 schwenkbar an dem ersten Lenker 13 des Viergelenkmechanismus 12 gelagert, so dass die Zylinder-Kolben-Einheit 28 mit dem ersten Endbereich 30 über den Hebel 33 ebenfalls mit dem ersten Lenker 13 zusammenwirkt. Auf einer dem Gelenkpunkt 36 des ersten Endbereichs 30 der Zylinder-Kolben-Einheit 28 abgewandten Seite des Gelenkpunkts 37 ist der Koppellenker 35 in einem Gelenkpunkt 38 an den Hebel 33 angebunden. Andernends ist der Koppellenker 35 vorliegend mit der Verriegelungseinrichtung 20 verbunden, wobei die Anlenkung vorliegend im Bereich des ersten hakenförmigen Verriegelungsbereichs 21 der Verriegelungseinrichtung 20 vorgesehen ist.

Mit dem zweiten Endbereich 30 ist die Zylinder-Kolben-Einheit 28 an einem Übersetzungsgetriebe 40 angebunden, das hier als Zweischlag mit zwei in einem Gelenkpunkt 43 gelenkig miteinander verbundenen Lenkern 41, 42 ausgeführt ist. Der erste Lenker 41 des Zweischlags 40 ist an einem dem Gelenkpunkt 43 abgewandten Ende in einem Gelenkpunkt 44 an der Karosserie 11 angelenkt, wohingegen der zweite Lenker 42 des Zweischlags 40 an einem dem Gelenkpunkt 43 abgewandten Ende in einem Gelenkpunkt 45 an dem ersten Lenker 13 des Viergelenkmechanismus 12 angebunden ist. Der zweite Endbereich 30 der Zylinder-Kolben-Einheit 28 ist vorliegend in einem Gelenkpunkt 47 an den zweiten Lenker 42 des Zweischlags 40 angebunden. Das Übersetzungsgetriebe 40 ist vorgesehen, um einen gewünschten Kraftverlauf bei einer Verlagerung des Verdeckkastendeckels 8 zwischen der geschlossenen Position und der offenen Position zu erzielen und die Verlagerung mit einem gewünscht geringen Hub der Zylinder-Kolben-Einheit 28 durchführen zu können.

Ausgehend von der in Fig. 2 gezeigten geschlossenen Position des Verdeckkastendeckels 8 mit in der Verriegelungsposition befindlicher Verriegelungseinrichtung 20 wird bei beginnender Ausfahrbewegung eines Zylinders 31 der Zylinder-Kolben-Einheit 28 aufgrund der vorliegenden Gewichtsverhältnisse zuerst der erste Endbereich 29 der Zylinder-Kolben-Einheit 28 relativ zu der bezüglich der Vorrichtung als ortsfest angesehenen Karosserie 11 verlagert und der Hebel 33 hierdurch um den Gelenkpunkt 37 verschwenkt. Hierdurch wird der Koppellenker 35 derart verlagert, dass die Verriegelungseinrichtung 20 um den Gelenkpunkt 23 verschwenkt wird. Die Verriegelungseinrichtung 20 wird hierdurch von der Verriegelungsposition in die Freigabeposition verlagert, in der die hakenförmigen Verriegelungsbereiche 21 und 22 außer Eingriff mit den Verriegelungselementen 24 bzw. 25 sind.

Um die Freigabeposition der Verriegelungseinrichtung 20 festzulegen und bei einer Betätigung der Zylinder-Kolben-Einheit 28 einen definierten Wechsel zwischen einer Verlagerung der Verriegelungseinrichtung 20 und einer Verlagerung des Viergelenkmechanismus 12 zu erzielen, ist eine als Anschlag 48 ausgeführte Blockiereinrichtung vorgesehen. Der Anschlag 48 ist vorliegend an dem ersten Lenker 13 des Viergelenkmechanismus 12 angeordnet und begrenzt eine Verschwenkung des Hebels 33 um den Gelenkpunkt 37.

Bis der Hebel 33 mit dem Anschlag 48 in Kontakt kommt, verbleibt der Verdecckastendeckel 8 in der geschlossenen Position. Bei einer weiteren Ausfahrbewegung des Zylinders 31 der Zylinder-Kolben-Einheit 28 wird der zweite Endbereich 30 der Zylinder-Kolben-Einheit 28 relativ zu der Karosserie 11 verlagert und betätigt den Zweischlag 40. Dies wiederum führt zu einer Betätigung des Viergelenkmechanismus 12 und zu einer Überführung des Verdeckkastendeckels 8 von der geschlossenen Position in die offene Position, in der das Verdeck 2 in dem Ablageraum 10 ablegbar ist.

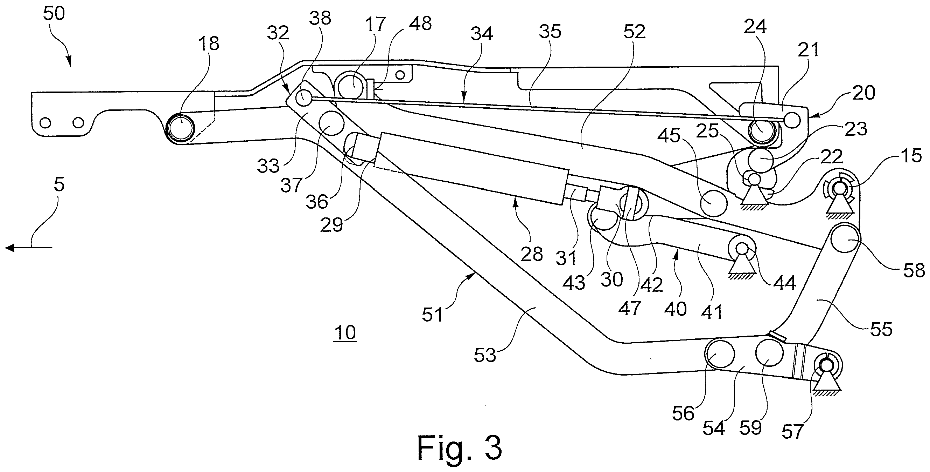

In Fig. 3 bis Fig. 7 sind alternativ zu der Vorrichtung 9 ausgeführte Vorrichtungen 50, 60, 70, 80 und 90 gezeigt, wobei im Folgenden jeweils lediglich auf die Unterschiede der jeweiligen Vorrichtung 50, 60, 70, 80, 90 zu der jeweils referenzierten Vorrichtung 9, 50, 60, 70, 80, 90 eingegangen wird und ansonsten auf die Ausführungen zu der referenzierten Vorrichtung 9, 50, 60, 70, 80, 90 verwiesen wird.

Die Vorrichtung 50 unterscheidet sich von der Vorrichtung 9 dadurch, dass der Mehrgelenkmechanismus 51 als Siebengelenkmechanismus ausgeführt ist. Dies hat den Vorteil, dass eine Verlagerungsbewegung des Verdeckkastendeckels 8 zwischen der geschlossenen Position und der offenen Position vorteilhaft flexibel ausgeführt sein kann. Hierzu weist der Mehrgelenkmechanismus 51 neben einem dem ersten Lenker 13 im Wesentlichen entsprechenden ersten Lenker 52 und einem dem zweiten Lenker 14 im Wesentlichen entsprechenden zweiten Lenker 53 zwei weitere Lenker 54 und 55 auf. Im Unterschied zu dem zweiten Lenker 14 ist der zweite Lenker 53 mit einem dem deckelseitigen Gelenkpunkt 18 abgewandten Ende nicht karosseriefest gelagert, sondern in einem Gelenkpunkt 56 an den dritten Lenker 54 angebunden, der wiederum an einem dem Gelenkpunkt 56 abgewandten Ende in einem Gelenkpunkt 57 karosseriefest gelagert ist. Der vierte Lenker 55 ist einenends in einem Gelenkpunkt 58 mit dem ersten Lenker 52 und andernends in einem zwischen den Gelenkpunkten 56 und 57 angeordnetem Gelenkpunkt 59 mit dem dritten Lenker 54 verbunden.

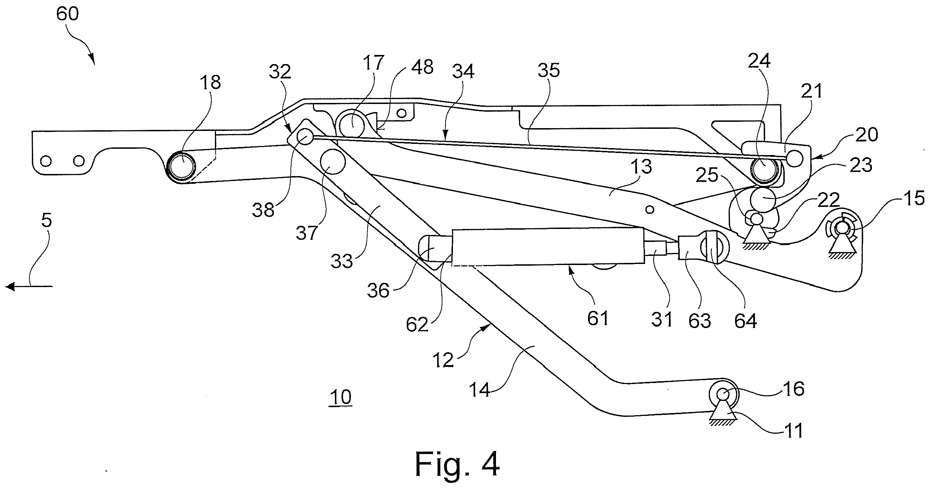

Bezüglich der Vorrichtung 60 gemäß Fig. 4 wird grundsätzlich wiederum auf die Vorrichtung 9 gemäß Fig. 9 verwiesen. Die Vorrichtung 60 unterscheidet sich hiervon dadurch, dass zur Verlagerung des Viergelenkmechanismus 12 kein Übersetzungsgetriebe 40 vorgesehen ist. Eine grundsätzlich der Zylinder-Kolben-Einheit 28 entsprechende Zylinder-Kolben-Einheit 61 ist mit einem ersten Endbereich 62 mit dem Hebel 33 des Betätigungsmechanismus 32 gekoppelt, wohingegen ein zweiter Endbereich 63 der Zylinder-Kolben-Einheit 61 in einem Gelenkpunkt 64 direkt mit dem ersten Lenker 13 des Viergelenkmechanismus 12 verbunden ist.

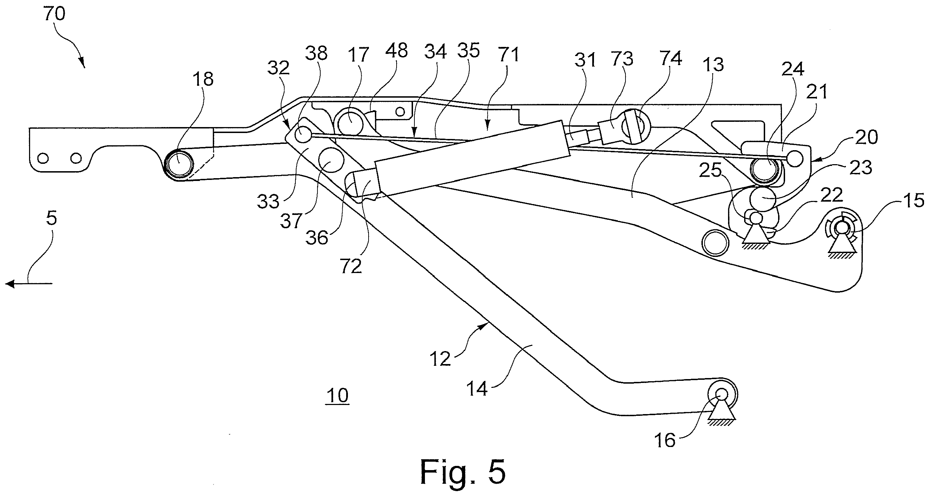

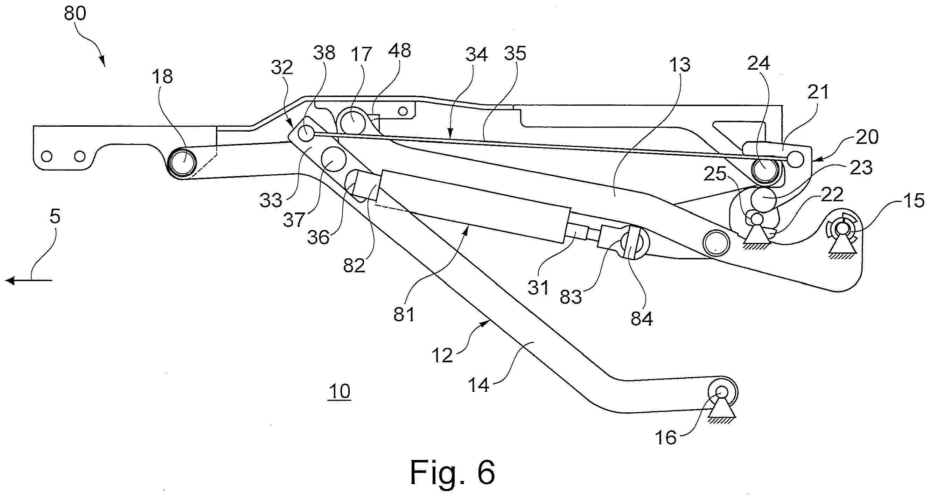

Bezüglich der Ausführungen der Vorrichtung 70 gemäß Fig. 5 und der Vorrichtung 80 gemäß Fig. 6 wird auf die Ausführungen zur Vorrichtung 60 gemäß Fig. 4 verwiesen.

Bei der Vorrichtung 70 gemäß Fig. 5 ist eine Zylinder-Kolben-Einheit 71 vorgesehen, die mit einem ersten Endbereich 72 wiederum mit dem Hebel 33 des Betätigungsmechanismus 32 verbunden ist, wohingegen ein zweiter Endbereich 73 der Zylinder-Kolben-Einheit 71 in einem Gelenkpunkt 74 an den Verdeckkastendeckel 8 angebunden ist.

Bei der Vorrichtung 80 gemäß Fig. 6 ist eine Zylinder-Kolben-Einheit 81 vorgesehen, die mit einem ersten Endbereich 82 wiederum mit dem Hebel 33 des Betätigungsmechanismus 32 verbunden ist, wohingegen ein zweiter Endbereich 83 der Zylinder-Kolben-Einheit 81 in einem Gelenkpunkt 84 an der Karosserie 11 angebunden ist.

Bei den Vorrichtungen 70 und 80 ist der zweite Endbereich 73 bzw. 83 der jeweiligen Zylinder-Kolbeneinheit 71 bzw. 81 jeweils ortsfest gelagert, so dass eine Verlagerungsbewegung des Verdeckkastendeckels 8 durch eine Bewegung des jeweiligen ersten Endbereichs 72 bzw. 82 gegenüber der Karosserie 11 durchgeführt wird.

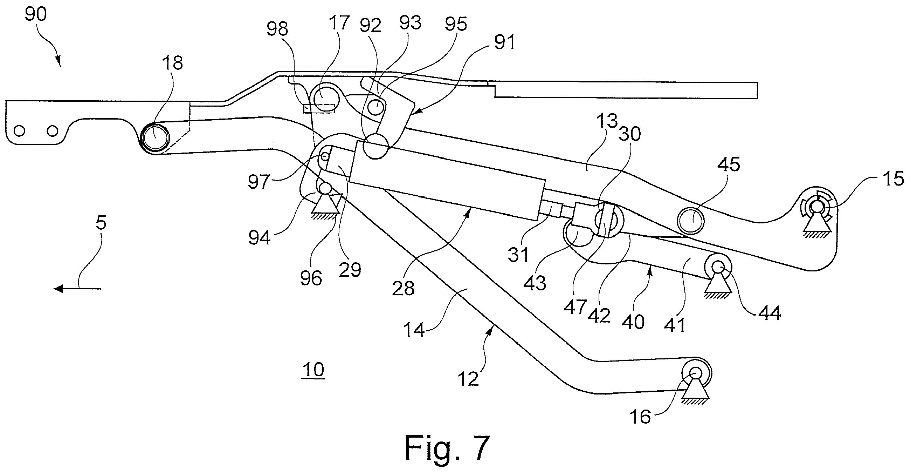

Bezüglich der Vorrichtung 90 gemäß Fig. 7 wird grundsätzlich auf die Ausführungen zur Vorrichtung 9 verwiesen. Bei der Vorrichtung 90 ist eine vergleichbar zu der Verriegelungseinrichtung 20 ausgeführte, ebenfalls mit einem Doppelhaken ausgeführte Verriegelungseinrichtung 91 vorgesehen, die im Vergleich zu der Verriegelungseinrichtung 20 an einer anderen Stelle des ersten Lenkers 13 in einem Gelenkpunkt 92 mit dem ersten Lenker 13 verbunden ist. Die Verriegelungseinrichtung 91 weist vergleichbar zu der Verriegelungseinrichtung 20 einen ersten hakenförmigen Verriegelungsbereich 93, der in der Verriegelungsposition der Verriegelungseinrichtung 91 in Eingriff mit einem an dem Verdeckkastendeckel 8 angeordneten Verriegelungselement 95 steht, und einen zweiten hakenförmigen Verriegelungsbereich 94 auf, der in der Verriegelungsposition der Verriegelungseinrichtung 91 in Eingriff mit einem an der Karosserie 11 angeordneten Verriegelungselement 96 steht.

Im Unterschied zu der Vorrichtung 9 ist die Zylinder-Kolben-Einheit 28 bei der Vorrichtung 90 mit dem ersten Endbereich 29 direkt in einem Gelenkpunkt 97 an der Verriegelungseinrichtung 91 angelenkt, der zu dem Gelenkpunkt 92 beabstandet ist. Es ist weiterhin eine funktional der Blockiereinrichtung 48 entsprechende als Anschlag 98 ausgeführte Blockiereinrichtung vorgesehen, die an dem ersten Lenker 13 des Viergelenkmechanismus 12 angeordnet ist.

Grundsätzlich sind im Zusammenhang der jeweiligen Vorrichtung 9, 50, 60, 70, 80, 90 beschriebene Merkmale beliebig miteinander kombinierbar. Sämtliche Varianten sind beispielsweise mit einem beliebig ausführbaren Mehrgelenkmechanismus umsetzbar, wobei der Mehrgelenkmechanismus insbesondere als Viergelenkmechanismus oder als Siebengelenkmechanismus ausgeführt ist.

Weiterhin können sämtliche Vorrichtungen 9, 50, 60, 70, 80, 90 sowohl mit als auch ohne Übersetzungsgetriebe 40 ausgeführt sein. Auch die Anbindung des zweiten Endbereichs der Zylinder-Kolben-Einheit an den Verdeckkastendeckel 9, die Karosserie 11, den Mehrgelenkmechanismus 12 bzw. 51 oder das Übersetzungsgetriebe 40 ist grundsätzlich flexibel wählbar. Zudem kann bei jeder Vorrichtung 9, 50, 60, 70, 80, 90 gewählt werden, ob die jeweilige Verriegelungseinrichtung 20 bzw. 91 direkt oder mittels eines Betätigungsmechanismus 32 von der Zylinder-Kolben-Einheit betätigbar ist. Auch kann bei jeder Vorrichtung 9, 50, 60, 70, 80, 90 die Verriegelungseinrichtung 20 bzw. 91 neben der in den Figuren gezeigten Ausführung als Doppelhaken auch jeweils mit einem einfache Haken ausgebildet sein, der lediglich mit einem an dem Verdeckkastendeckel 8 angeordneten Verriegelungselement 24 bzw. 95 oder lediglich mit einem an der Karosserie 11 angeordneten Verriegelungselement 25 bzw. 96 in Eingriff bringbar ist.

## Patentansprüche

1. Vorrichtung (9; 50; 60; 70; 80; 90) zum Abdecken eines Ablageraums (10) eines Verdecks (2) eines Cabriolet-Fahrzeugs (1) mit einer Deckeleinrichtung (8), einem Mehrgelenkmechanismus (12; 51), einer als Zylinder-Kolben-Einheit (28; 61; 71; 81) ausgeführten Antriebseinrichtung und einer Verriegelungseinrichtung (20; 91), wobei die Zylinder-Kolben-Einheit (28; 61; 71; 81) zur Verlagerung der Deckeleinrichtung (8) zwischen einer den Ablageraum (10) zumindest teilweise freigebenden offenen Position und einer den Ablageraum (10) zumindest teilweise abdeckenden geschlossenen Position mit dem Mehrgelenkmechanismus (12; 51) wirkverbunden ist, und wobei die Zylinder-Kolben-Einheit (28; 61; 71; 81) zur Verlagerung der Verriegelungseinrichtung (20; 91) zwischen einer die Deckeleinrichtung (8) in der geschlossenen Position haltenden Verriegelungsposition und einer eine Bewegung der Deckeleinrichtung (8) freigebenden Freigabeposition mit der Verriegelungseinrichtung (20; 91) wirkverbunden ist, **dadurch gekennzeichnet, dass** die Verriegelungseinrichtung (20; 91) in einem Gelenkpunkt (23; 92) an einem Lenker (13; 52) des Mehrgelenkmechanismus (12; 51) angelenkt ist und die Zylinder-Kolben-Einheit (28; 61; 71; 81) mit einem ersten Endbereich (29; 62; 72; 82) mit diesem Lenker (13; 52) des Mehrgelenkmechanismus (12; 51) zusammenwirkt, wobei die Verriegelungseinrichtung (20; 91) über eine relative Bewegung des ersten Endbereichs (29; 62; 72; 82) der Zylinder-Kolben-Einheit (28; 61; 71; 81) gegenüber der sich in der geschlossenen Position befindlichen Deckeleinrichtung (8) zwischen der Verriegelungsposition und der Freigabeposition verlagerbar ist.

2. Vorrichtung nach Anspruch 1, **dadurch gekennzeichnet, dass** der erste Endbereich (29) der Zylinder-Kolben-Einheit (28) direkt an der Verriegelungseinrichtung (91) angelenkt ist.

3. Vorrichtung nach Anspruch 1, **dadurch gekennzeichnet, dass** ein an dem Lenker (13; 52) des Mehrgelenkmechanismus (12; 51) angebundener Betätigungsmechanismus (32) vorgesehen ist, der einerseits mit der Verriegelungseinrichtung (20) und andererseits mit dem ersten Endbereich (29; 62; 72; 82) der Zylinder-Kolben-Einheit (28; 61; 71; 81) verbunden ist.

4. Vorrichtung nach Anspruch 3, **dadurch gekennzeichnet, dass** der Betätigungsmechanismus (32) einen an dem Lenker (13; 52) angelenkten und mit dem ersten Endbereich (29; 62; 72; 82) der Zylinder-Kolben-Einheit (28; 61; 71; 81) verbundenen Hebel (33) aufweist, der direkt oder mittels einer Koppeleinrichtung (34) mit der Verriegelungseinrichtung (20) zusammenwirkt.

5. Vorrichtung nach Anspruch 1, **dadurch gekennzeichnet, dass** ein mit dem Lenker (13; 52) des Mehrgelenkmechanismus (12; 51) verbundener Schiebemechanismus vorgesehen ist, mittels welchem die Zylinder-Kolben-Einheit (28; 61; 71; 81) mit der Verriegelungseinrichtung (20) wirkverbunden ist, wobei der erste Endbereich (29; 62; 72; 82) der Zylinder-Kolben-Einheit (28; 61; 71; 81) an den Schiebemechanismus angebunden ist.

6. Vorrichtung nach einem der Ansprüche 1 bis 5, **dadurch gekennzeichnet, dass** die Verriegelungseinrichtung (20; 91) in der Verriegelungsposition mit einem an der Deckeleinrichtung (8) angeordneten Verriegelungselement (24; 95) in Eingriff ist oder mit einem an einer Karosserie (11) angeordneten Verriegelungselement (25; 96) in Eingriff bringbar ist.

7. Vorrichtung nach einem der Ansprüche 1 bis 5, **dadurch gekennzeichnet, dass** die Verriegelungseinrichtung (20; 91) in der Verriegelungsposition sowohl mit einem an der Deckeleinrichtung (8) angeordneten Verriegelungselement (24; 25) in Eingriff ist als auch mit einem an einer Karosserie (11) angeordneten Verriegelungselement (25; 96) in Eingriff bringbar ist.

8. Vorrichtung nach Anspruch 7, **dadurch gekennzeichnet, dass** die Verriegelungseinrichtung (20; 91) als Doppelhaken ausgeführt ist.

9. Vorrichtung nach einem der Ansprüche 1 bis 8, **dadurch gekennzeichnet, dass** ein dem ersten Endbereich (29; 62; 72; 82) der Zylinder-Kolben-Einheit (28; 61; 71; 81) abgewandter zweiter Endbereich (30; 63; 73; 83) der Zylinder-Kolben-Einheit (28; 61; 71; 81) an der Deckeleinrichtung (8), an einer Karosserie (11) oder an einem Lenker (13, 14; 52, 53, 54, 55) des Mehrgelenkmechanismus angebunden ist.

10. Vorrichtung nach einem der Ansprüche 1 bis 9, **dadurch gekennzeichnet, dass** ein mit dem Mehrgelenkmechanismus (12; 51) verbundenes Übersetzungsgetriebe (40) vorgesehen ist, an das ein dem ersten Endbereich (29) der Zylinder-Kolben-Einheit (28) abgewandter zweiter Endbereich (30) der Zylinder-Kolben-Einheit (28) zur Betätigung des Mehrgelenkmechanismus (12; 51) angebunden ist.

11. Vorrichtung nach einem der Ansprüche 1 bis 10, **dadurch gekennzeichnet, dass** der Mehrgelenkmechanismus (12) als Viergelenkmechanismus ausgeführt ist.

12. Vorrichtung nach einem der Ansprüche 1 bis 10, **dadurch gekennzeichnet, dass** der Mehrgelenkmechanismus (51) mit wenigstens fünf, insbesondere sieben Gelenkpunkten ausgeführt ist.

13. Vorrichtung nach einem der Ansprüche 1 bis 12, **dadurch gekennzeichnet, dass** eine Blockiereinrichtung (48; 98) vorgesehen ist, mittels der eine Bewegung der Verriegelungseinrichtung (20; 91) in wenigstens einer Richtung begrenzt ist.

14. Vorrichtung nach einem der Ansprüche 1 bis 13, **dadurch gekennzeichnet, dass** der erste Endbereich (29; 62; 72; 82) der Zylinder-Kolben-Einheit (28; 61; 71; 81) derart mit dem Mehrgelenkmechanismus (12; 51) zusammenwirkt, dass die Deckeleinrichtung (8) in Einbauposition der Vorrichtung (9; 50; 60; 70; 80; 90) mittels einer durch eine relative Bewegung des ersten Endbereichs (29; 62; 72; 82) der Zylinder-Kolben-Einheit (28; 61; 71; 81) gegenüber einer Karosserie (11) zwischen der offenen Position und der geschlossenen Position verlagert ist.

15. Vorrichtung nach einem der Ansprüche 1 bis 13, **dadurch gekennzeichnet, dass** der zweite Endbereich (29; 62; 72; 82) der Zylinder-Kolben-Einheit (28; 61; 71; 81) derart mit dem Mehrgelenkmechanismus (12; 51) zusammenwirkt, dass die Deckeleinrichtung (8) in Einbauposition der Vorrichtung (9; 50; 60; 70; 80; 90) mittels einer durch eine relative Bewegung des zweiten Endbereichs (30; 63; 73; 83) der Zylinder-Kolben-Einheit (28; 61; 71; 81) gegenüber einer Karosserie (11) zwischen der offenen Position und der geschlossenen Position verlagert ist.
